# EUROPEAN PATENT APPLICATION

(11) **EP 1 868 027 A1**
(43) Date of publication of application: **19.12.2007**
(21) Application number: 07109944.4
(22) Date of filing: 09.06.2007
(51) Int. Cl.: G02F 1/13357

(54) **Super bright color filter module for liquid crystal displays**

(30) Priority: 12.06.2006 CN 200610051896
(71) Applicant: Li, Tong, 315800 Zhejiang Ningbo (CN)
(72) Inventor: Li, Tong, 315800 Zhejiang Ningbo (CN)
(74) Representative: Korga, Leokadia

(57) **Abstract**

A module for a liquid crystal display includes a beam condenser (21) separating an extended light beam (24) from the light source (18) into discrete unpolarized micro beams (26), beam displacer (22) for separating the discrete unpolarized beams into polarized micro beams, a color displacer (23) separating white polarized micro light beams from the beam displacer into orthogonally polarized primary color beams and directing the orthogonally polarized primary color to different locations for display panel, and a beam diffuser directing axial beam into different viewing angles.

## Description

The present invention relates to flat panel displays and in particular to a color filter and polarizer module that more efficiently utilizes the photon energy provided by the display backlight.

Liquid crystal displays (LCDs) have been widely used as display screens in portable electronics applications, such as notebook computers, camcorders, cell phones as similar devices. In LCD displays, there are two ways to show the images on the screen, either with a backlight (transmissive mode) or using ambient light (reflective mode) to illuminate the LCD panel. However, in the case of color LCD displays utilization of the photon energy of the backlight is only about 5 to10%. Consequently, LCD screen brightness and contrast ratio are not comparable to that provided by cathode ray tubes (CRTs). Further, the power consumption of an LCD device limits the number of hours that the device may be operated on battery power. For example, in the case of a notebook computer the energy consumed by the backlight typically consumes 70% or more of the available battery power between charges.

To compensate for the relatively low screen brightness and poor contrast ratio of an LCD, the light output of the backlight has to be strong. This in turn results in unutilized photon energy that generates excessive heat detrimental to the life of the LCD. This is especially the case for on panel devices such as thin film transistors (TFTs). Increasing backlight energy utilization has been a concern of LCD manufactures and designers since the advent of LCD displays, and increasing the energy efficiency of LCD displays has the potential of increasing the use of LCDs in electronic devices.

The present invention addresses the shortcomings of conventional LCD displays by enhancing utilization of backlight energy in liquid crystal flat panel displays. Specifically, the invention increases screen brightness and contrast ratio and/or reduces energy consumption in liquid crystal displays.

The present invention provides a module for liquid crystal displays including a beam condenser with a lens array that divides light emitted by the light source into discrete micro beams and a beam displacer that splits the discrete micro beams into spaced apart polarized o and e beams. In one variation, the beam condenser comprises a lens array including a transparent panel with first convex protrusions or lenses with a first radius on a first side and second convex or concave protrusions or lenses with a second radius on a second side. The first radius is larger than the second radius such that light impinging the first side is transmitted from the second side as a plurality of parallel discrete light beams. In an alternate variation, the beam condenser includes a first panel comprising a first transparent convex lens array and a second transparent panel comprising a second convex or concave lens array. In this variation, the lenses of the second convex or concave lens array have a radius smaller that the radius of the lenses of the first lens array such that light impinging the first panel is emitted from the second panel as a plurality of discrete light beams. The lenses of the first array are aligned with the lenses of the second array with the focal points of the lenses of the first array overlapping the focal points of the lenses of the second array to produce the micro beams.

In one embodiment, the module includes a color displacer for separating white light into the primary colors red, green and blue. The color displacer includes an array of interference color filters, as opposed to absorptive dye or pigment filters. In one aspect, the primary color filters are arranged in an array wherein a first filter transmits a first primary color and reflects a second and third primary colors and a second filter reflects the second primary color and transmits the third primary color. The third filter reflects the third primary color. These filters line up periodically perpendicular to the incident light beams.

The beam displacer is made of a birefringent material such that unpolarized light traveling through the beam displacer will separate or walk-off into a polarized ordinary (o) beam and a polarized extraordinary (e) beam. The beam displacer preferably comprises liquid crystal molecules disposed between a pair of substrates. The beam displacer eliminates the need for the first polarizer in a convention LCD structure. In one variation, the beam displacer is integrated with a color displacer into a color beam displacer. The color beam displacer is preferably formed from a glass or plastic substrate, a color filter array and an array of liquid crystal molecules positioned between the substrate and color filter array.

The beam displacer and color displacer can be further integrated into color beam displacer, and said color beam displacer separates white unpolarized micro beams into two groups of orthogonal polarized Red, Green, Blue primary colors, and deflects these colors to different locations according to their corresponding color and polarization states.

At the exiting side of color displacer or color beam displacer, there is a beam diffuser panel. The beam diffuser panel is a concave lens based micro column array, which directs a normal incident beam (with respect to the panels) to different directions for viewers at different viewing angles.

The invention provides a module for a liquid crystal display that eliminates the need for at least one polarizer as compared to the prior art. The elimination of the polarizer results in a larger fraction of the light emitted by the LCD light source or backlight being transmitted to the display panel. The invention also provides a module for a color liquid crystal display that utilizes an array of interference color filters that separate and transmit color from the light source rather than filtering the light by absorption. Consequently, an even greater fraction of the light emitted by the backlight is used for display, rather than being dissipated as heat. Combining the features of a beam displacer and color displacer can theoretically increases the overall utilization of light energy emitted by the backlight by six fold compared to conventional LC displays. Thus, the display screen performance in terms of brightness and contrast ratio can be significantly enhanced and/or the energy consumption can be significantly reduced.

Additional features and advantages of the present invention will become apparent from the following description of the accompanying drawings in which like numerals designate the same or like elements:

Figure 1 is a partial cross section of a prior art liquid crystal display structure, wherein 11, 12 are pair of orthogonally placed linear polarizers; 13 and 14 are active and passive plates, respectively; 15 is thin film transistor (TFT) array; 16 is color filter; 17 is twist nematic liquid crystal molecules array; 18 is backlight, arrows and dots represent corresponding polarization directions.

Figure 2 is a schematic partial cross section of one embodiment of the liquid crystal display module according to the invention including a beam condenser 21, beam displacer 22 and color displacer 23.

Figure 3(a) is a schematic representation illustrating a cross section of the beam condenser 21 (convex-convex lens array) of Figure 2, wherein the convex lens array composed by two surfaces with different radius condenses an extended beam into a group of micro beam array. The condensing power is determined by the ratio of the radius of 44 and 45. 31 is the black matrix used to block the ambient light.

Figure 3(b) is a schematic representation of an optical system representing a lens structure of the beam condenser lens array of Figure 3(a), wherein B₁ and B₂ are the beam widths of two sides of lens, respectively, and the panel's condensing power is B₁:B₂.

Figure 4(a) is a schematic representation of an alternative of beam condenser panel 21 in Figure 2 (convex-concave), wherein the lens array composed by two surfaces with different radius condenses an extended beam into a group of micro beam array. The condensing power is determined by the ratio of the radius of 44 and 45. 31 is the black matrix used to block the ambient light.

Figure 4(b) is a schematic representation of an optical system representing a lens structure of the beam condenser lens array of Figure 4(a), wherein B₁ and B₂ are the beam widths of two sides of lens, respectively, and the panel's condensing power is 8₁:8₂.

Figure 5(a) is an alternative schematic representation the beam condenser 21 in Fig. 2, which is a two-panel convex-convex lens array. 51 and 52 are first and second lens arrays, respectively. The setting of this combination is that it will condense and divide the extended beam into a group of micro-mini beam array. The condensing power is determined by the ratio of the focal lengths of these two panels. Note that the 31 array is the black matrix used to block astray light.

Figure 5(b) is a schematic representation of an optical system representing a lens structure of the beam condenser lens array of Figure 5(a), wherein B₁, *f*₁ and B₂, *f*₂ are the beam widths and focal lengths of 51 and 52 panels, respectively, and the panel's condensing power is B₁:B₂.

Figure 6(a) is an alternative schematic representation the beam condenser 21 in Figure 2, which is a two-panel convex-concave lens array. 51 and 52 are convex and concave lens arrays, respectively. The setting of this combination is that it will condense and divide the extended beam into a group of micro-mini beam array. The condensing power is determined by the ratio of the focal lengths of these two panels. Note that the 31 array is the black matrix used to block astray light.

Figure 6(b) is a schematic representation of an optical system representing a lens structure of the beam condenser lens array of Figure 6(a), wherein B₁, *f*₁ and B₂, *f*₂ are the beam widths and focal lengths of 51 and 52 panels, respectively, and the panel's condensing power is B₁:B₂.

Figure 7(a) is a schematic representation of a conventional LCD pixel structure, wherein 33 is gate line, 34 is data line, 35 is TFT, 36 is storage capacitor, 37 is transparent ITO electrode.

Figure 7(b) is a schematic representation of LCD pixel structure according to this invention, wherein 33 is gate line, 34 is data line, 35 is TFT, 36 is storage capacitor, 37 is transparent ITO electrode.

Figure 8(a) is schematic representation of a beam displacer according to the invention;

Figure 8(b) is a partial cross section of the beam displacer of Figure 2 in which nematic liquid crystals 73 are sandwiched between glass or plastic substrates 75 and 76 while aligned in an angle with respect to the travel direction of the light.

Figure 9(a) a partial cross section of a color displacer panel of the invention, wherein three primary colors are deflected to corresponding locations by three micro beam splitter according to the color order. In this structure, 231, 232, and 233 are Red, Green, and Blue filters, and 234 is the substrate.

Figure 9(b) is a front view (A) of the filter array of the color displacer panel of Figure 9(a).

Figure 9(c) is a schematic representation illustrating the filtering function of the color filter array of the color displacer Figure 9(a).

Figure 10(a) is a plot showing transmission spectrum of a red (blue) color filter in which the red spectrum is transmitted, while green and blue spectra are reflected.

Figure 10(b) is a plot showing transmission spectrum of a green filter, in which the green spectrum is reflected, while the red and blue spectra are transmitted.

Figure 11 (a) is a schematic representation of a first color filter array in current invention, wherein only two kinds of filters (231 and 232) are involved, and color string starts from Red.

Figure 11 (b) is a schematic representations of a second color filter array in current invention, wherein only two kinds of filters (232 and 233) are involved, and color string starts from Blue.

Figure 12 is a schematic representation of a color beam displacer structure according to the invention wherein a color displacer panel 23 is used as a substrate for the beam displacer.

Figure 13(a) is a schematic representation of a module utilizing a beam condenser 21 and color displacer 23 according to the invention, wherein conventional color filter 16 is replaced by the combination of 21 and 23.

Figure 13(b) is a schematic representation of a variant of the module of Figure 13(a) illustrating the color displacer is used as passive substrate of the LCD panel.

Figure 14 is a schematic representation of application of beam condenser 21, beam displacer 22 and color displacer 23, wherein the first linear polarizer 11 and dye color filters 16 in a convention LCD structure are replaced according to the invention.

Figure 15 is a schematic representation of application of beam condenser 21 and color beam displacer 24, wherein the first linear polarizer 11 and dye color filters 16 in a convention LCD structure are replaced according to the invention.

Figure 16 is a schematic representation of a variant of the module of Figure 15, wherein the color beam displacer is used as a substrate of the TN-LCD display panel.

Figure 17 is a cross-section schematic representation of beam diffuser 25.

Figure 18 is a perspective schematic representation of beam diffuser 25.

Figure 19 is a schematic representation of application of beam condenser 21, color displacer 23 and beam diffuser 25 as discrete modules in LCD structure.

Figure 20 is a schematic representation of application of beam condenser 21 and beam diffuser 25 as discrete modules in LCD structure wherein color displacer 23 is used as one of the substrates to sandwich the liquid crystal molecules.

Figure 21 is a schematic representation of a LCD structure wherein color displacer and diffuser 25 are used as two substrates to sandwich the liquid crystal molecules.

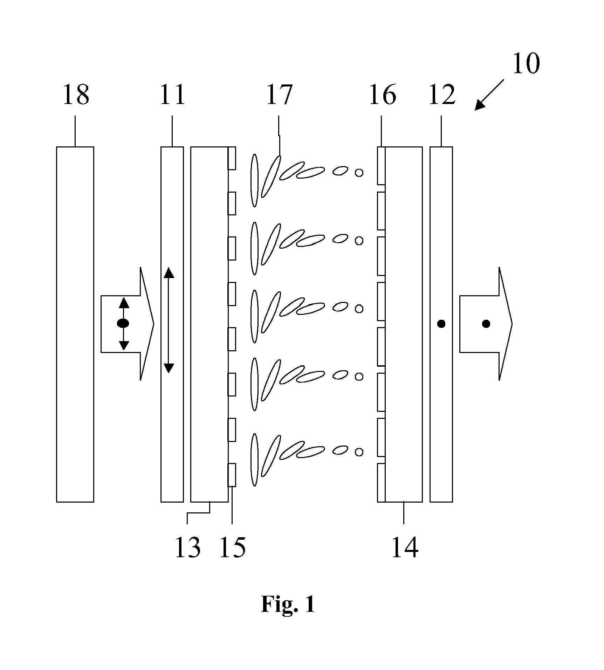

Referring to Figure 1, a conventional simplified typical transmissive twist nematic (TN) LCD panel structure 10 comprises a pair of linear polarizers or polarizing filters 11 and 12 positioned at the entrance and exit sides of the panel, respectively. Filters 11 and 12 are oriented such that the direction of polarization of the filter 11 is orthogonal to that of filter 12. The direction of polarization of light in the figures is indicated by dots and arrows. Positioned between polarizers 11 and 12 are glass substrates or plates 13 and 14. Plate 13 is the active plate on which driving devices such as thin-film transistors (TFTs) 15 are located and plate 14 is the passive plate on which dye/pigment color filters 16 are printed. Positioned between substrates 13 and 14 is a layer of twist nematic liquid crystal (TN-LC) molecules 17 that are attached to alignment layers formed on substrates 13 and 14 such that the molecules are twisted with the alignment of the ends of the molecules at each substrate surface being orthogonal to each other in the absence of an electric field. A backlighting device 18 positioned behind LCD panel 10 directs white natural (unpolarized) light onto polarizer 11. Application of an electric field realigns the TN-LC molecules to either transmit or block transmission of light.

Light from backlighting device 18 passing through filter 11 is polarized with up to about 60% of the photon energy being absorbed by the filter. Polarized light from filter 11 passes through the layer of liquid crystals molecules 17 and is filtered by dye or pigment color filter array 16 on passive plate 14 into red (R), green (G) and blue (B). Dye or pigment color filters 16 are absorption type filters, that is the filters transmit light of a certain color and absorb the rest of the energy in the visible spectrum. More than 60% of the light energy that reaches color filter array 16 is absorbed. The end result is that less than 10% of the energy emitted by backlight 18 is output from panel 10. This inefficiency results in conventional LCDs having low brightness and reduced contrast ratio compared to other display devices such as cathode ray tubes (CRTs).

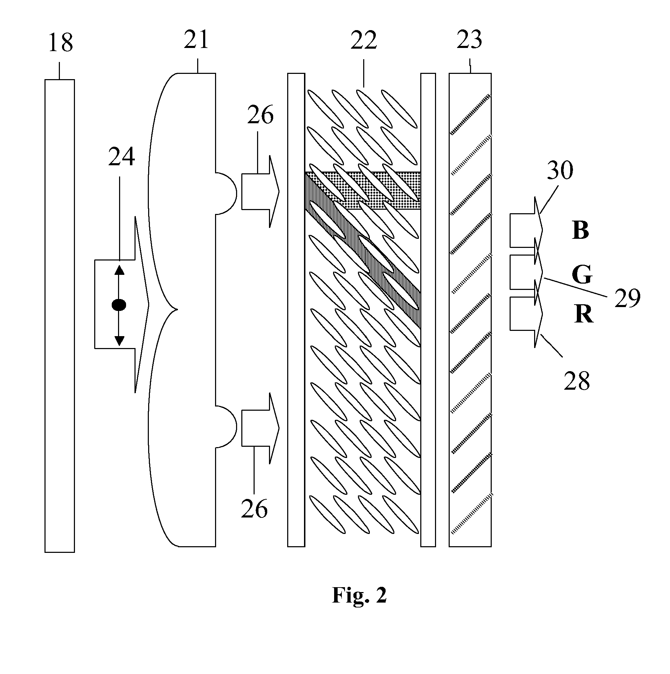

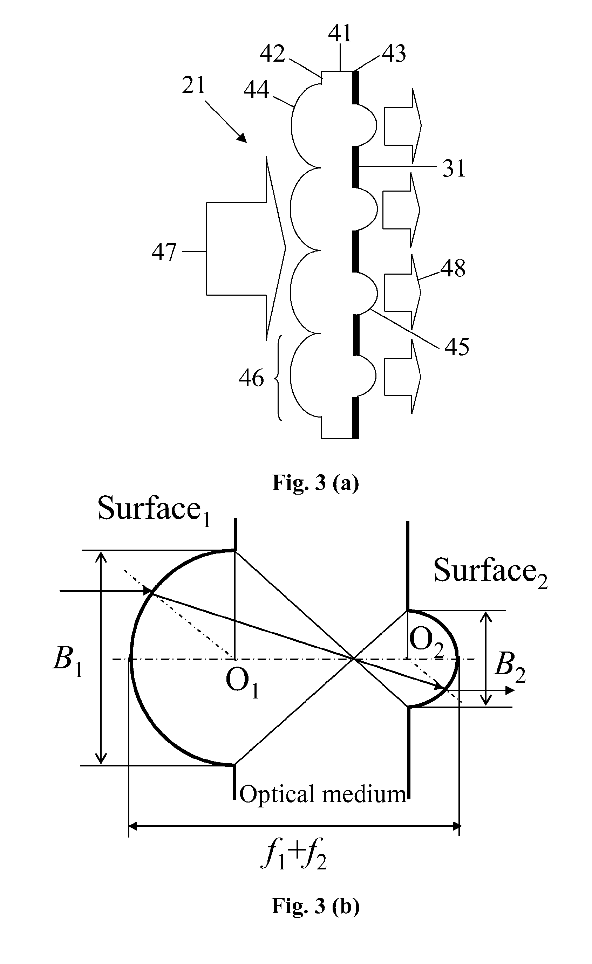

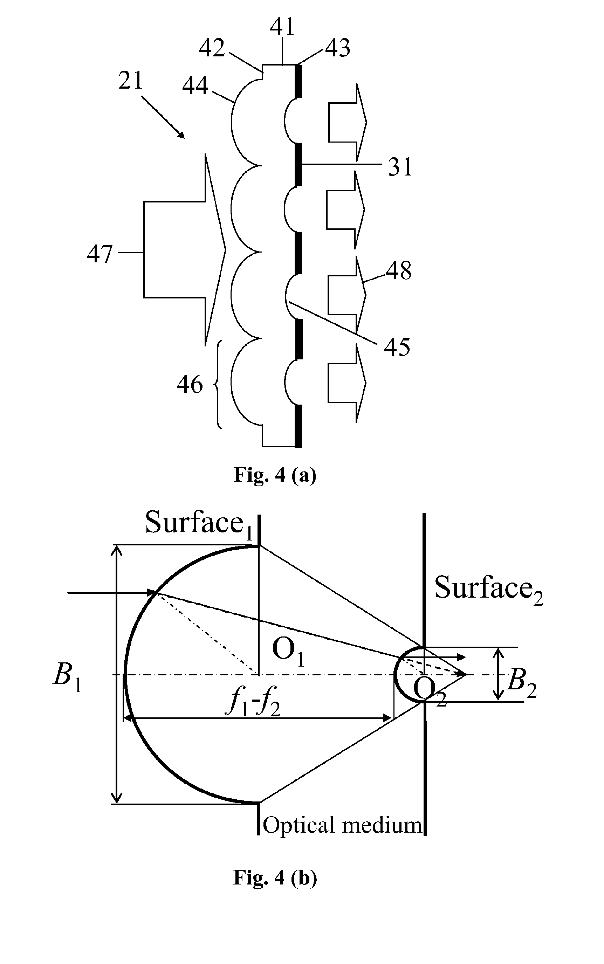

Referring now to Figures 2, beam condenser 21 could be a single-panel or two-panel combination. These two forms are given in Figures 3(a) and 4(a), respectively. For the single panel structure, the transparent panel 41 has two sides 42 and 43 with an array of large radius convex projections of lenses 44 on first side of 42 and a plural of smaller radius convex/concave projections or lenses 45 on second surface 43. A black matrix 31 blocks the passage of ambient light through beam condenser 21 at locations other than small radius projections 45 since undesired ambient light will result in distortion of the color transmitted through color displacer 23. As shown in Figures 3(b) and 4(b), this single panel is set in such way that the focal points of both side curvatures overlap each other, thus the beam of width of B₁ will be condensed to a beam of width of B₂ after passing through this panel. The condensing power of beam condenser is namely the curvature radius ratio of two sides. The width of discrete micro beams B₂ should be equal to the LC panel pixel aperture width. Neglecting aperture ratio issues, for a black and white LCD the magnification power or ratio is 2:1 or 2x and for color LCD screens this ratio is 6:1 or 6x since each impinging beam width B₁ must be subsequently divided to cover two or six pixels.

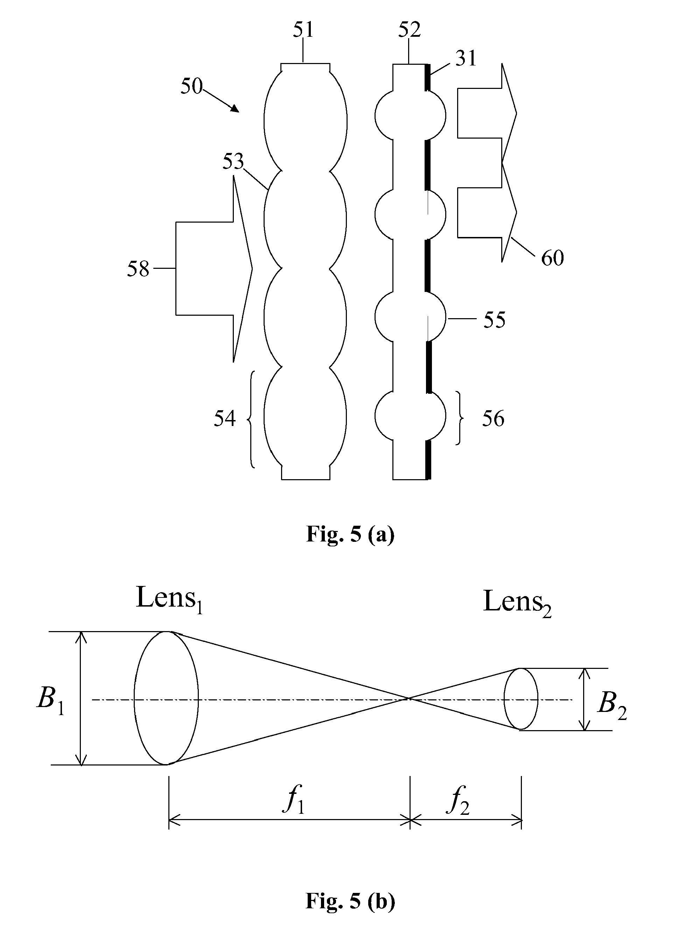

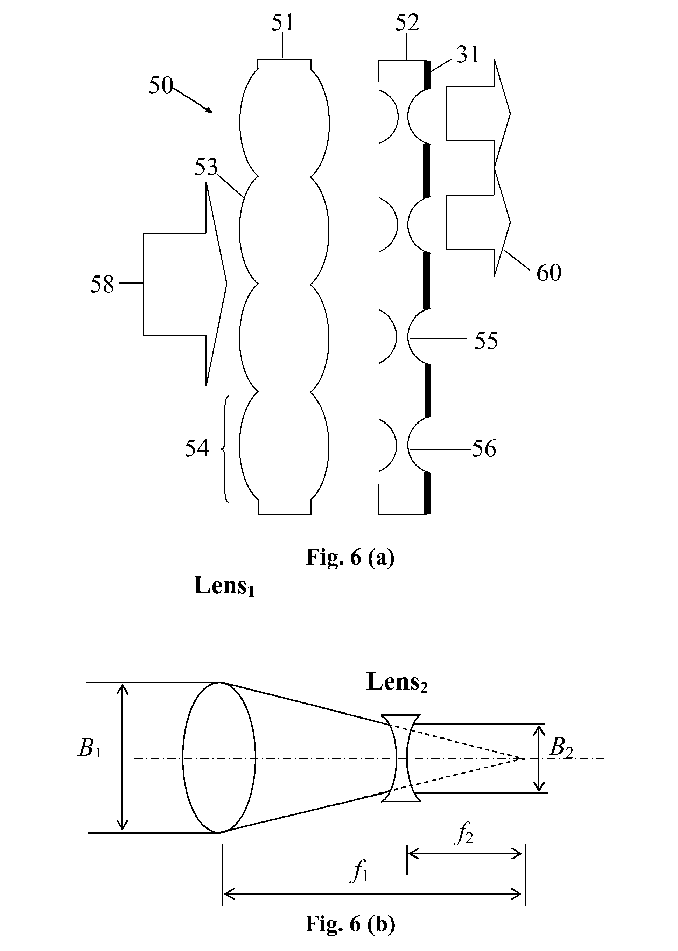

Referring to Figures 5(a) and 6(a), in an alternate embodiment of the invention, a beam condenser 50 comprises two spaced apart transparent glass or plastic lens panels 51 and 52. Lens panel 51 includes a plurality of symmetrically arranged large radius convex projections 53. Similarly, lens panel 52 includes a plurality of small radius convex (concave) projections 55 to form a lens structure. Panels 51 and 52 are aligned and spaced such that the principle axes of lens structures of 51 and 52 are aligned with overlapping focal points to form the optical system schematically illustrated in Figure 5(b) and 6(b). As will be appreciated by those skilled in the art, the working principles of the beam condensers of Figures 3(a), 4(a), 5(a) and 6(a) are essentially the same, the only difference is that in the single panel structure of Figure 3(a) the focal points of the lens structure overlaps within the optical medium, while in other structures (4(a), 5(a), 6(a)) the focal point of the lens structure overlapped in the space outside the panels. Preferably, all air-to-glass/plastic surfaces are coated with an anti-reflection agent (AR) to maximize the light transmission.

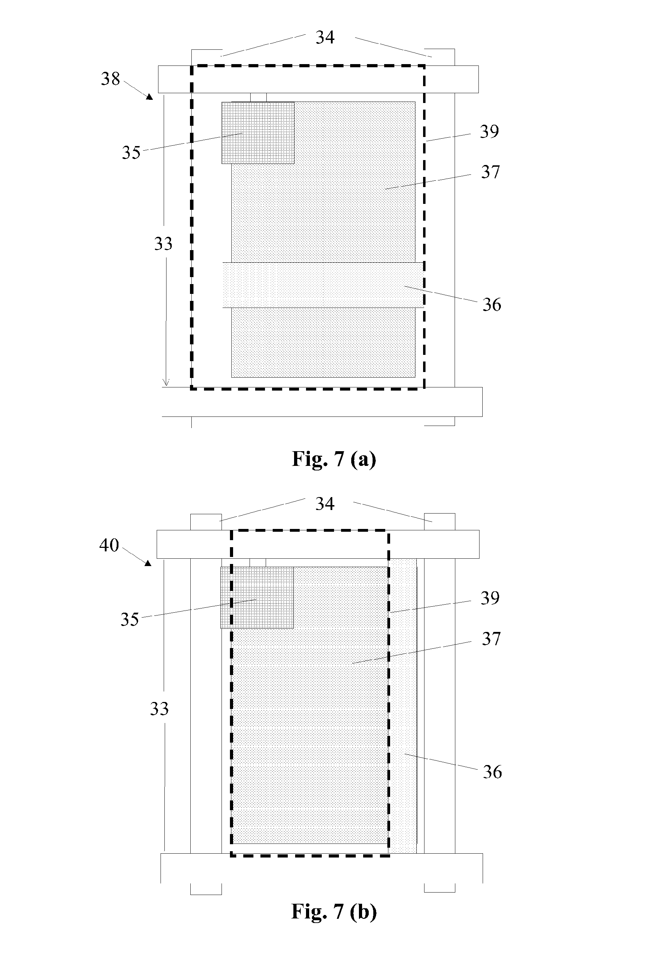

One advantage of the beam condenser design of the invention is that the magnification or condensing power can be set to a desired value that permits efficient use of the light energy provided by backlight 18. For example, in a conventionally illuminated LCD structure illustrated in Figure 7(a), not all photon energy impinging onto the pixel is utilized since the typical aperture ratio is less than 70% due to opaque areas such as the covered by storage capacitor 36 and TFT 35. Referring to Figure 7(a) pixel cell 38 is bounded by a gate lines or row electrodes 33, data lines or column electrodes 34 and comprises a TFT 35, storage capacitor 36 and an ITO electrode 37. The aperture ratio for pixel is the ratio of the transparent area (shaded) within ITO electrode 37 to the illuminated area 39 encompassed by the dotted line. Figure 7(a) schematically represents pixel 38 as illuminated by conventional means whereas Figure 7(b) represents a similar pixel 40 illuminated in accordance with the invention. A comparison of Figure 7(a) with Figure 7(b) illustrates that the aperture ratio can be significantly enhanced by adjusting the beam condenser's condensing or magnification power such that the illuminated area excludes or partially excludes the opaque areas of pixel cell.

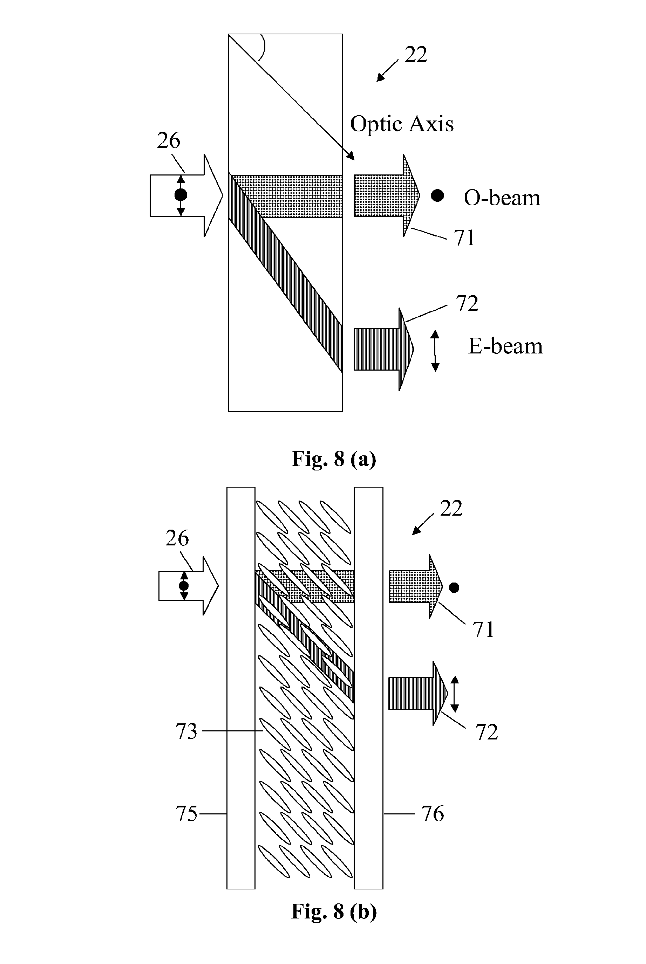

Turning to Figures 8(a) and 8(b), unpolarized discrete parallel micro beams 26 transmitted from the beam condenser impinge beam displacer 22 which is made from a birefringent material. Unpolarized light traveling through beam displacer 22 will experience beam walk-off, that is, the light will be separated into a linearly polarized ordinary (o) beam 71 and a linearly polarized extraordinary (e) beam 72 as shown in Figure 8(a). The walk-off angle of the crystal is determined by the crystal orientation and material birefringence. For a given walk-off angle, the walk-off distance or displacement is proportional to the crystal thickness as illustrated in Figure 8(a). Thus, by controlling the beam displacer's thickness, the walk-off distance can be designed precisely. In the case of a color LCD structure, beam displacer 22 needs to be thicker to assure that the displacement of e beam 72 from the o beam 71 is equal to or larger than three times the width of beam 70, since each white beam will be subsequently displaced into three colored beams (red, green and blue) by color displacer 23 (Figure 2).

Typically birefringent materials include crystals such as Calcite, YV04 and LiNb03. However other materials, such as liquid crystal molecules may be used to produce beam displacer 22. In the embodiment illustrated in Figure 8(b), beam displacer 22 is formed from a spatially fixed polymer dispersed liquid crystal 73 positioned between two glass or plastic substrates 75 and 76. Preferably, the liquid crystal molecules 73 of beam displacer 22 are aligned and fixed to substrates 75 and 76 using known techniques to create the largest walk-off angle that can be realized to minimize the thickness of the beam displacer. Beam displacer 22 provides a cost effective alternative to other birefringent materials and can be fabricated in large sheet sizes. If the beam displacer panel is used as a discrete component, both outer sides of the panel are preferably coated with an anti reflection agent for maximum light transmission.

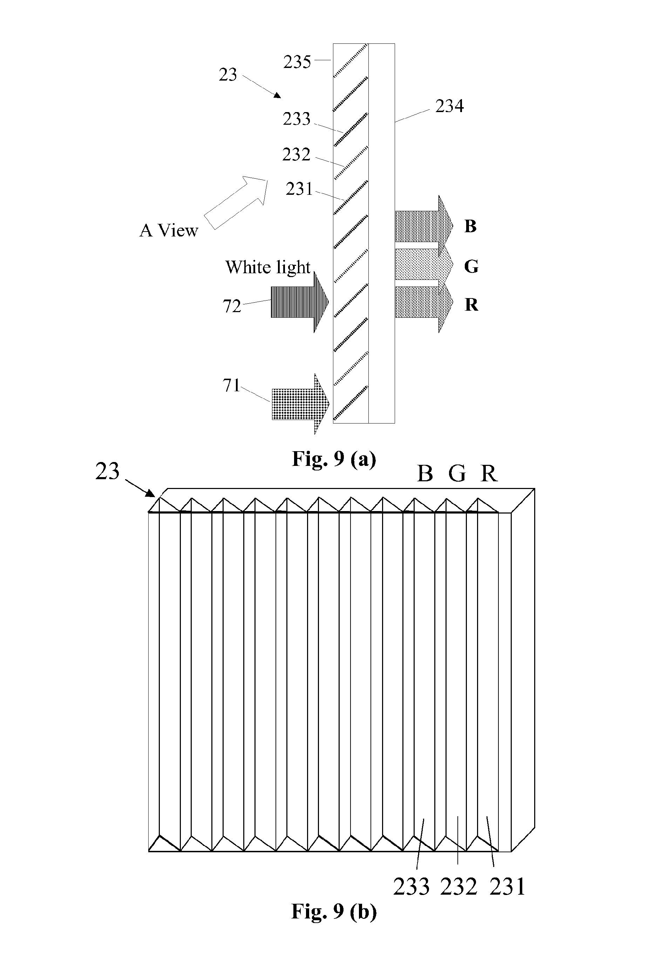

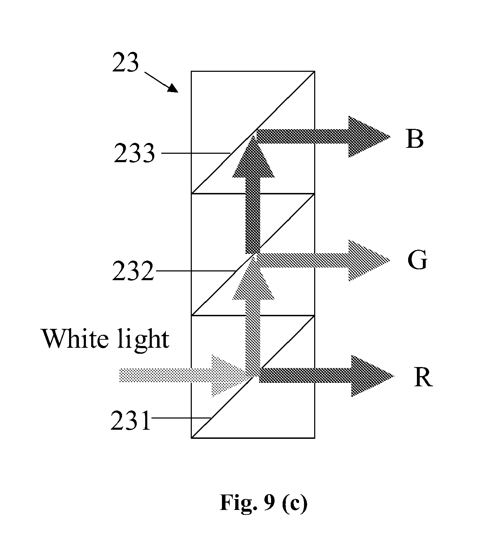

Referring to Figures 9(a)-9(c), polarized o and e beams, 71, 72 transmitted from beam displacer 22 impinge color displacer panel 23. Color displacer panel 23 is a cascaded beam splitter array formed from interference bandpass filters 231-233. Filters 231-233 are formed on a glass or plastic substrate 234 and set at 45° with respect to impinging beams 71, 72. Interference filters are well known in the art and a typical dielectric interference filter is formed of alternating dielectric layers with different indices of refraction. The alternating dielectric layers can be configured in terms of thickness and high/low indices to produce a transmission window at a desired center wavelength with a desired bandwidth.

Referring to Figure 9(c), white light impinges R filter 231 which transmits a red portion of the spectrum to active panel of the liquid crystal display and reflects the remainder of the spectrum, including green and blue spectra to G filter 232. G filter 232 reflects a green portion of the spectrum to the active panel and transmits the remainder of the spectrum to B filter 233 which reflects a blue portion of the spectrum to the active panel. In this fashion light beams of the three primary colors are sequentially displaced from white light. That is, the starting color filter 231 transmits the desired spectrum to the active panel, while the next two color filters reflect the other two primary colors to the panel.

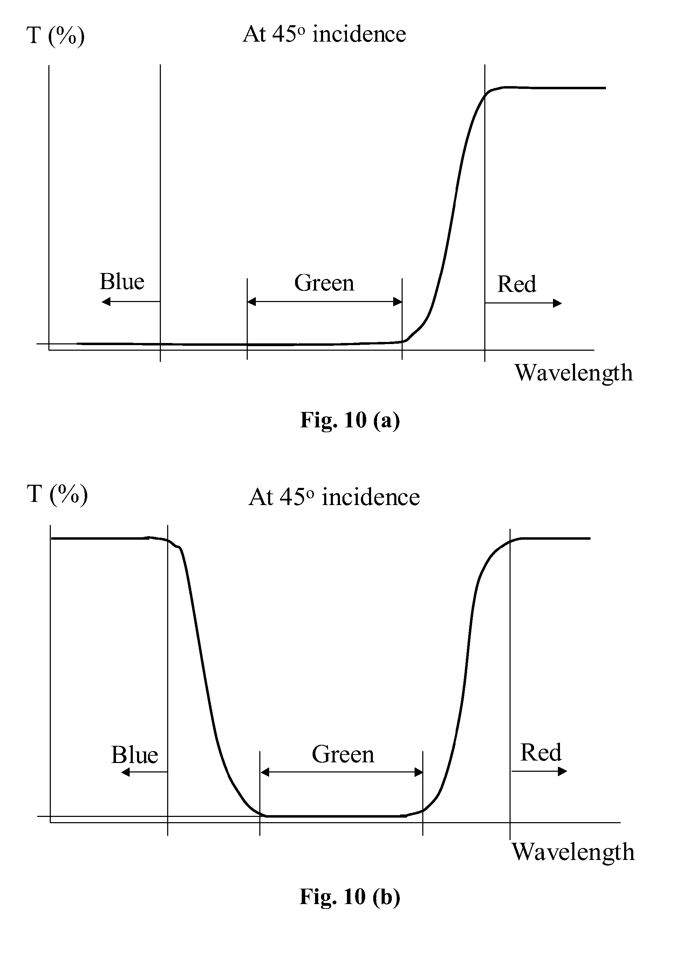

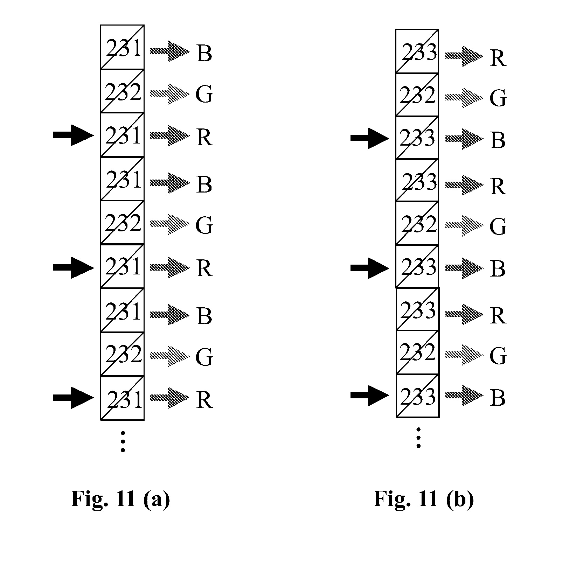

Figure 10(a) is a plot showing transmission spectrum of R filter 231, which transmits the red portion of spectrum and reflects green and blue at 45°. Figure 10(b) illustrates the transmission spectrum of G filter 232 which reflects the green portion of the spectrum and transmits red and blue at 45°. Since both filters 231 and 232 transmit red and reflect at least one of green and blue, in practice only two different filters are required to separate the three primary colors. As illustrated in Figure 11 (a), when the first filter in the array is R filter 231, the filter transmits the red portion of the spectrum to the active panel and reflects the green and blue portions. The next filter, G filter 232, reflects the green portion of the spectrum to the active panel and transmits the remaining light to the next filter in the sequence, an R filter 231 which reflects a blue portion of the spectrum panel and transmits the remainder of the light. In the same fashion, when the color string starts with blue, as illustrated in Figure 11 (b), only blue (233) and Green (232) filters may be required. The foregoing two filter configuration for color displacer 23 simplifies and reduces the production cost of the color displacer.

As will be appreciated, proper alignment of beam condenser 21 and color displacer panel 23 is important for proper functioning of the color displacer. Since the first of filters 231-233 in the color string functions as a transmissive device and the second and third filters are reflective devices, the white light beam must be properly aligned with the first filter. If the light beam is not properly aligned with the first filter in the color string, the color composition of the light transmitted to the active panel may be wrong.

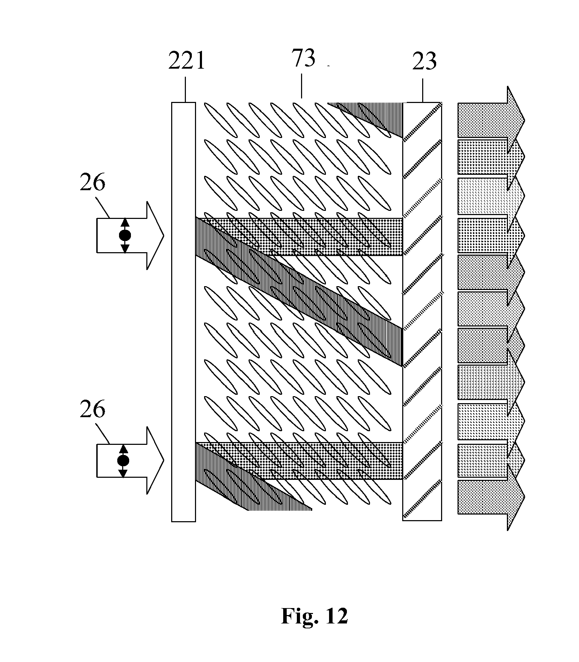

Figure 12 illustrates another embodiment of the invention wherein the functionalities of beam displacer 22 and color displacer 23 are integrated. As shown, color displacer 23 is used as one of the substrates to sandwich spatially fixed polymer dispersed liquid crystal 73. In this configuration, the inner side of color displacer 23 does not require an anti reflective coating since the indices of the adjacent materials are very close. The configuration illustrated in Figure 12 also eliminates the need for an anti reflective coating on the outer side of original substrate, since the function of the substrate is replaced by color displacer 23.

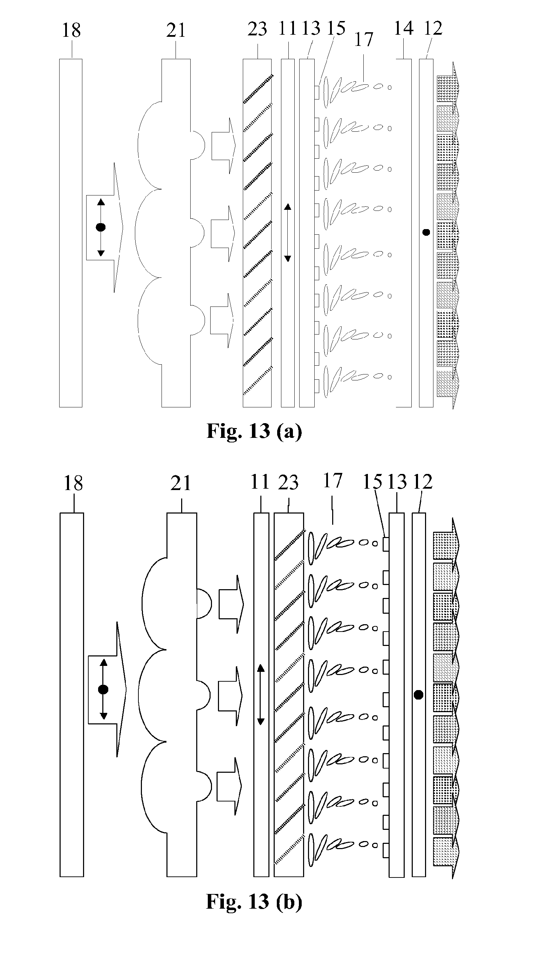

Referring to Figure 13(a), a configuration wherein a module in accordance with the invention includes a discrete color displacer panel 23 eliminating the need for the dye or pigment color filters 16 of Figure 1. In this configuration, the beam condenser 21 and color displacer panel 23 are sandwiched between backlight device 18 and the TN-LC panel. The extended white beam from backlight 18 is first condensed by beam condenser panel 21 into multiple 1/3 beams. These discrete micro white beams are then separated or displaced into three equal width primary colors beams R, G, B with color displacer 23. The colored micro beams act as light sources for the display panel. In this embodiment, first linear polarizer 11 may theoretically be placed anywhere between backlighting device 18 and active plate of LC panel 13. The simplicity of the configuration shown in figure 13(a) results in a module highly compatible with current TFT-LCD technology, and requires few modification to the current TFT-LD manufacturing process.

Figure 13(b) illustrates a TN-LC panel utilizing color displacer panel 23 as a passive substrate for the LC molecules. Since the color displacer 23 is a sheet of glass or plastic substrate that is not susceptible to excessive mechanical or thermal processes during the TFT display manufacturing process, the displacer panel may be used to support active and passive devices and to sandwich the LC molecules. For instance, for a passive plate, only two major processing steps are involved: electrode sputtering to apply the ITO electrodes and application and rubbing of the polymer molecule alignment coating. As illustrated, linear polarizer 11 is placed between beam condenser 21 and color displacer 22; however, polarizer 11 may be placed anywhere between backlighting device 18 and color displacer 23. In this configuration, color displacer panel 23 needs to be properly aligned with active substrate plate 13, on which TFTs 15 are positioned. However, if the color displacer panel 23 is used as an active plate, no separate alignment process between passive and active plates 11 and 13 is required since the alignment is taken care of during TFT processing. The configuration of Figure 13(b) simplifies manufacture of the TN-LC display structure and enhances the performance of the LCD display, due to removal of a substrate. Eliminating the substrate eliminates two AR coating processes, one on the surface of color displacer 23 and a second on the outer side of the LCD passive substrate. This configuration also reduces thickness of the display structure.

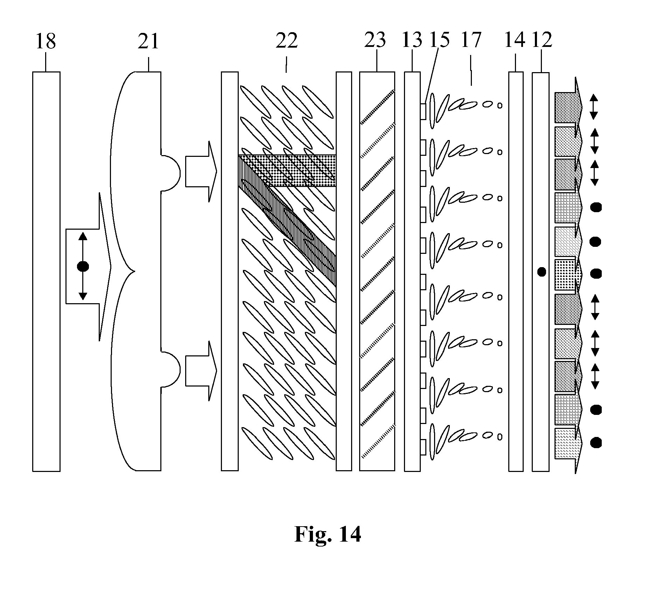

Figure 14 illustrates the three discrete components, beam condenser 21, beam displacer 22 and color displacer panel 23 positioned between backlight device 18 and the TN-LC panel. In this structure, the extended white beam from backlight 18 is first condensed by 6x1 beam condenser 21 into multiple 1/6 beams. The conversion or condensing power is 6x1, since the beam needs to be split into beams of p- and s- polarization by beam displacer 22 and then by color displacer 23 into the three primary colors. Beam displacer 21 splits the discrete micro beams from beam condenser 21 into side-by-side p- and s-polarized beams. The polarized micro beams from beam displacer 22 then impinge color displacer 23 and are filtered into primary colors, R, G, B. The R, G, B beams then enter the display substrate 13 and act as light sources. In this configuration, p-polarized RGB beams as a unit are always adjacent to s-polarized RGB beams. Furthermore, in this configuration, the beam condenser panel 21, color displacer 23 and pixel definition need to be well aligned while alignment of beam displacer 22 is not required. Since the exiting beams from the display substrate 14 are groups of orthogonally polarized RGBs, the TFT driving circuitry 15 needs to configured such that if a first three adjacent pixels are in a "normally on" mode, then the adjacent three pixel group must be "normally off" mode.

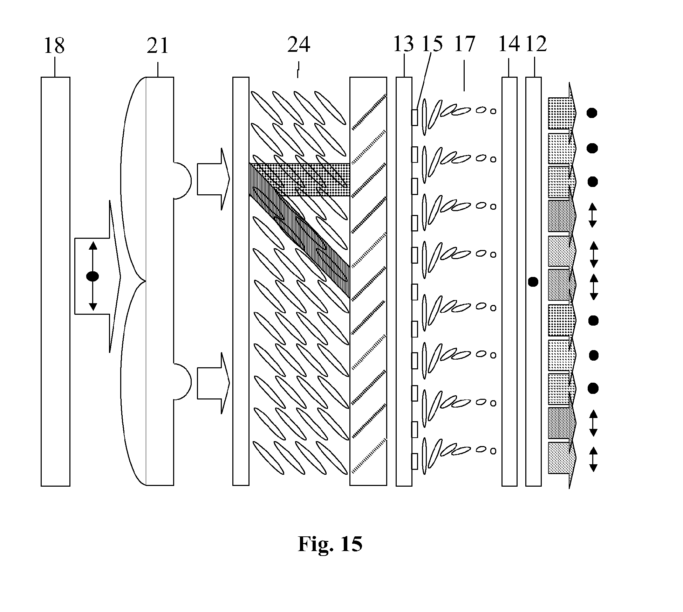

Figure 15 illustrates the use of an integrated color beam displacer 24 which combines the functions of beam displacer 22 and color displacer 23. As shown, the color beam displacer 24 is positioned between backlighting device 18 and the TN-LC panel. In this configuration two air-to-substrate surfaces are eliminated, and hence two AR coating processes are eliminated and structure becomes more compact.

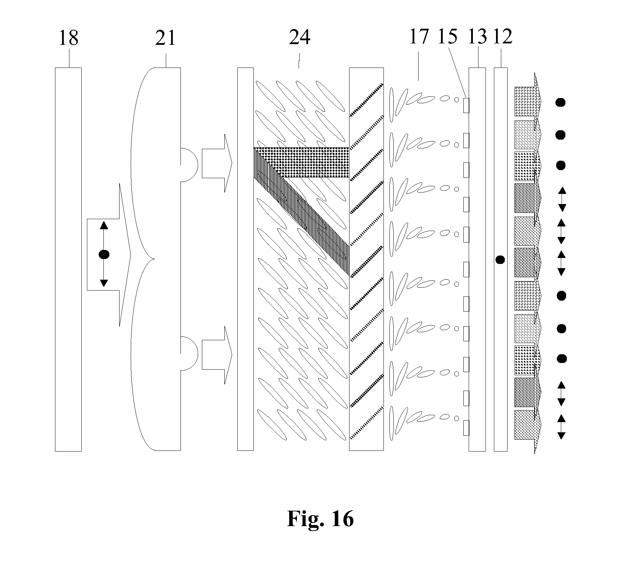

Figure 16 shows the further integration of the system wherein the integrated color beam displacer 24 acts as the passive substrate of the TN-LCD panel. The passive panel of TN-LCD illustrated in Figure 16 requires only two processing steps, sputtering of ITO electrode and application of the LCD polymer coating. The structure of Figure 16 requires no complicated processes such as photolithography and dye color filter printing. Further, color beam displacer 24 is a fixed PDLC panel that is not susceptible to further processing.

The operation of the structure of Figure 16 is the same as that of the structures of Figures 14 and 15. The approach illustrated in Figure 16 further simplifies the structure and fabrication of the structure and enhances the performance of the LCD. As compared to the configuration of Figure 15, one substrate and two AR coating processes are eliminated, one on the color displacer surface and another on the outer side of original LCD passive substrate. In addition, the thickness of the panel is reduced. As compared to the structure of Figure 14, the configuration of Figure 16 eliminates a beam displacer substrate and the TN-LCD panel passive substrate, the associated four interfaces and consequent processing and fabrication steps.

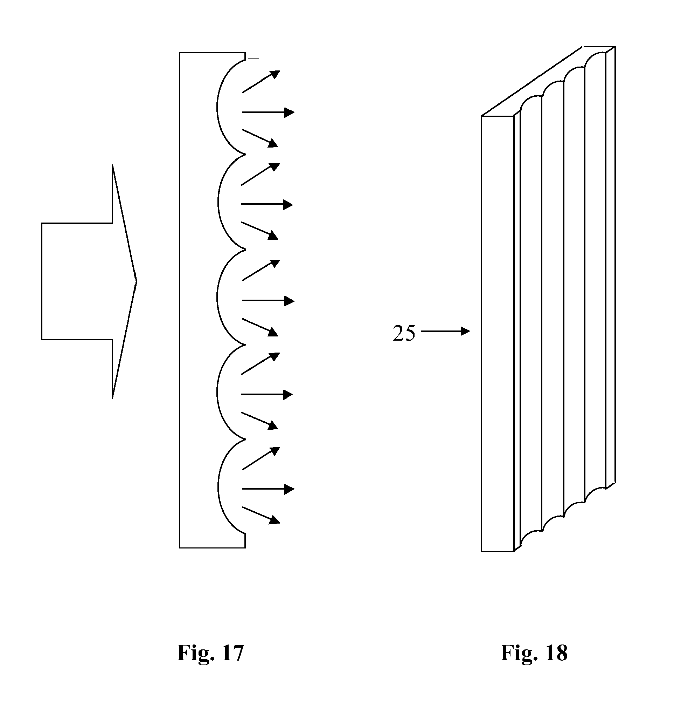

Since the color displacer in this invention is an array of interference filters, these filters are designed for certain incident angle. Deviation from the designed incident angle will result in shift of pass band wavelength. That is, viewers will observe different colors at different viewing angles, since color of different viewing angle corresponding to beams impinging the color displacer from different incident angles. Therefore, it is important to assure that the beam delivered to viewers' eyes (of all viewing angles) is axial beam impinging the color displacer at the same designed incident angle. For this purpose, one cylindrical concave lens panel based beam diffuser is positioned at the exiting side of the LCD panel. The cross section and perspective structures of the beam diffuser is illustrated in Figures 17 and 18, and as shown in these figures, an axial beam formed by black matrix 31 impinges beam diffuser 25 from left, and according to the well-known Snell's law, this parallel beam will be directed to different directions from the beam diffuser.

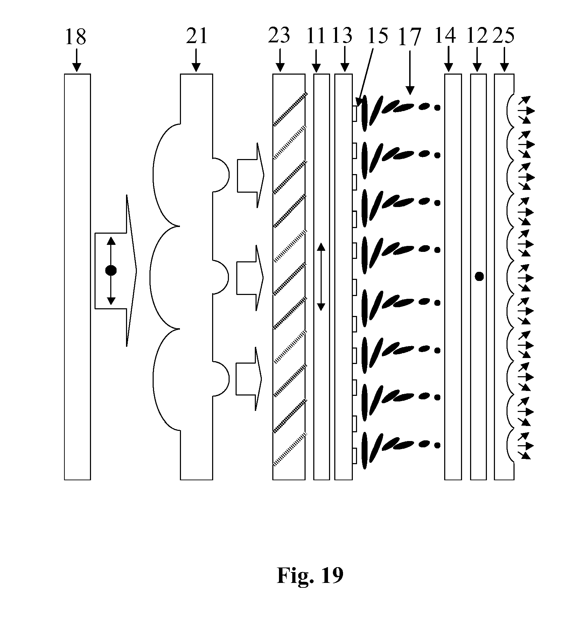

Referring to Figure 19, an application of discrete beam condenser 21, color displacer 23 and beam diffuser 25 in LCD system is illustrated, whereas beam diffuser is placed at the exiting surface of the LCD panel.

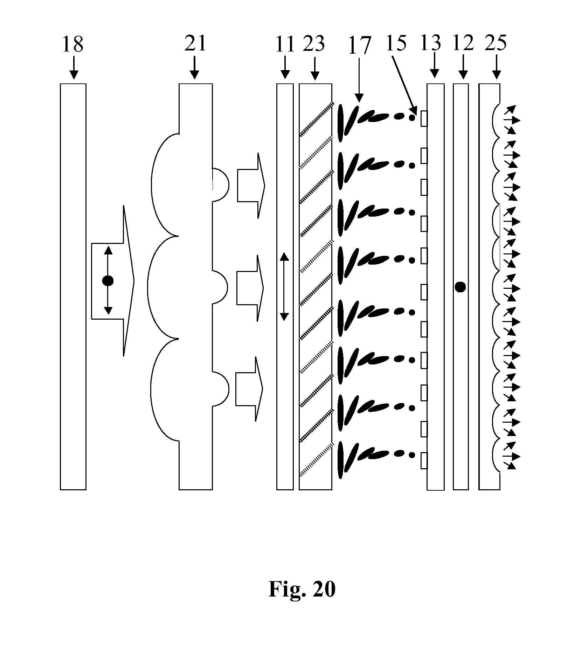

Referring to Figure 20, an application of discrete beam condenser 21 and beam diffuser 25 in LCD panel using color displacer 23 as one of the substrates is illustrated, whereas this structure is just a further integration of that shown in Figure 19.

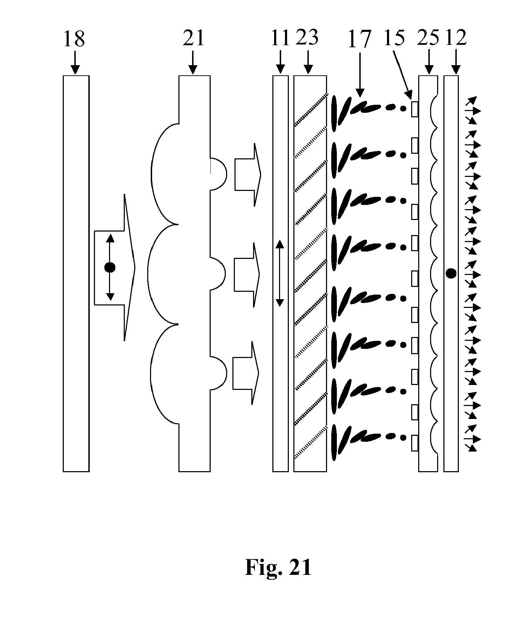

Referring to Figure 21, a LCD panel utilizing color displacer 23 and beam diffuser 25 as active and passive substrates is illustrated, whereas beam diffuser must be placed at the light exiting side.

While certain embodiments of the invention have been illustrated for the purposes of this disclosure, numerous changes in the method and apparatus of the invention presented herein may be made by those skilled in the art, such changes being embodied within the scope and spirit of the present invention as defined in the appended claims.

## Claims

1. A module for liquid crystal displays comprising:
a beam condenser that converts extended light emitted by the backlight into discrete micro beams;
a color displacer that converts white light into three primary colors and deflect them into different locations according to the order.

2. The module of claim 1 wherein there is a beam displacer in between said beam condenser and said color displacer, said beam displacer converts unpolarized discrete micro beams into two groups of linear polarized micro beams.

3. The module of claim 1 wherein the beam condenser comprises a lens array, the lens array including a transparent panel having first convex protrusions with a first radius on a first side and second convex or concave protrusions with a second radius on a second side wherein the first radius is larger than the second radius, wherein light impinging the first side is transmitted from the second side as a plural of discrete light beams. The protrusions of first side are aligned with the protrusions of the second side and wherein the focal points of the first side overlap the focal points of the second side.

4. The module of claim 1 wherein the beam condenser comprises:
a first transparent convex lens array;
a second transparent panel comprising a second convex or concave lens array, the lens of the second array having a radius smaller than the radius of the lenses of the first lens array, wherein light impinging the first panel is transmitted from the second panel as a plural of discrete light beams. The lenses of first array are aligned with the lenses of the second array and wherein the focal points of the lenses of the first array overlap the focal points of the lenses of the second array.

5. The module of claim 1 wherein said color displacer comprises first, second and third primary color filters arranged in a sequential pattern and aligned perpendicular to impinging beams to separate the impinging white light into primary color beams, wherein the color displacer is a filter array comprising:
a first filter that transmits a first primary color and reflects a second and third primary colors; and
a second filter that reflects the second primary color, and transmits the first and third primary colors; and
a third filter that reflects the third primary color.

6. The module of claim 2 wherein the beam displacer comprises a panel having first and second transparent substrates with spatially fixed polymer dispersed liquid crystal array disposed between the substrates.

7. The module of claim 5 and 6 are integrated into a color beam displacer, said color beam displacer compromising:
a glass or plastic substrate;
a color filter array panel; and
a liquid crystal molecules array positioned between the substrate
and color filter array.

8. The module of claim 1 or 2 wherein there is a beam diffuser set at the exiting surface of LCD panel, wherein said beam diffuser is a cylindrical concave lens element based array.

9. A liquid crystal display comprises the module of claim 1 or 2, and module of claim 8.

10. A liquid crystal display comprises the modules of claim 7 and 8.
